# EUROPEAN PATENT APPLICATION

(11) **EP 4 700 873 A1**
(43) Date of publication of application: **25.02.2026**
(21) Application number: 23934208.2
(22) Date of filing: 29.08.2023
(51) Int. Cl.: H01M 8/0245, H01M 8/021, H01M 8/0232, C22C 38/28, C21D 9/46, C21D 8/12

(54) **METAL SEPARATOR AND MANUFACTURING METHOD THEREFOR**

(30) Priority: 17.04.2023 KR 20230050366
(71) Applicant: Hyundai Steel Company, Incheon 22525 (KR)
(72) Inventor: KIM, Kun Ho, Hwaseong-si Gyeonggi-do 18473 (KR); CHOI, Sang Kyu, Changwon-si Gyeongsangnam-do 51408 (KR); IM, Hyun Uk, Seongnam-si Gyeonggi-do 13467 (KR); PARK, Kwang Seo, Dangjin-si Chungcheongnam-do 31711 (KR); JEONG, Yeon Soo, Gunpo-si Gyeonggi-do 15880 (KR); LEE, Young Jin, Changwon-si Gyeongsangnam-do 51424 (KR)
(74) Representative: Viering, Jentschura & Partner mbB Patent- und Rechtsanwälte
(86) International application number: PCT/KR2023/012830
(87) International publication number: WO 2024/219561

(57) **Abstract**

The present application relates to a metal separator and a manufacturing method therefor, the metal separator comprising a first base material comprising a first manifold part, a second manifold part, and a reaction part provided between the first and second manifold parts, wherein the first and second manifold parts each have a plurality of openings and surface portions present between the plurality of openings, and the upper surfaces of the surface portions and the inner surfaces of the openings each have a surface-modified layer. According to the metal separator and the manufacturing method therefor, not only electrical conductivity but also corrosion resistance can be excellent.

## Description

### TECHNICAL FIELD

The present application relates to a metal separator and a method of manufacturing the same.

### BACKGROUND

In recent years, powertrains have been changing from internal combustion engines (ICEs) to electric vehicles (EVs) or hydrogen fuel cell electric vehicles (FCEVs) in order to deal with global warming. Fuel cells used in hydrogen fuel cell electric vehicles (FCEVs) not only supply power for industrial and household uses and for driving vehicles, but also are used for power supply to small electronic products such as portable devices, and the scope of their use is gradually expanding as a highly efficient clean energy source in terms of both energy conservation and environmental measures.

A fuel cell is a kind of electric power generation device that converts the chemical energy held by fuel into electrical energy through electrochemical reactions in a stack, and generates electricity by using the energy produced during the binding reaction of hydrogen and oxygen. Specifically, fuel cells can use hydrogen gas or substances capable of producing hydrogen as fuel, and the oxidation reaction of the fuel can proceed and thus generate hydrogen ions (protons) and electrons. The hydrogen ions and electrons generated at this time cause an electrochemical reaction with oxygen in the air to produce water, and at the same time, electrical energy is generated from the flow of electrons.

These hydrogen fuel cells consist of a membrane electrode assembly, a gas diffusion layer (GDL), and a metal separator.

Of these components, the metal separator must separate hydrogen, oxygen, and cooling water, respectively, and distribute and supply them uniformly over the entire surface of the membrane electrode assembly for smooth electrochemical reactions in the membrane electrode assembly. As a result, the required properties of metal separator materials include excellent processability, excellent mechanical strength, high electrical conductivity, low gas permeability, thermal conductivity, and chemical stability, in addition to low prices.

The shape of the metal separator can be broadly divided into two portions, such as a reaction part formed in the central part and manifold parts formed respectively on both sides of the reaction part.

The manifold parts have inlets and outlets for supplying hydrogen, air, and the like, respectively, so that electrochemical reactions can occur, and also have an inlet and an outlet for cooling water that allows the operating temperature of the stack to be adjusted. In this case, a manifold part piercing process is performed to form the manifold parts in the metal separator.

Furthermore, the metal separator can be subjected to surface modification to improve corrosion resistance and conductivity, followed by the manifold part piercing process. However, there may arise a problem that exposed parts may occur in the manifold parts of the metal separator and corrosion resistance is not ensured accordingly.

Therefore, in order to solve such a problem, there is a need for a metal separator that is excellent not only in electrical conductivity but also in corrosion resistance, and a method of manufacturing the same.

### SUMMARY

### TECHINCL OBJECTS

It is an object of the present application to provide a metal separator that is excellent not only in electrical conductivity but also in corrosion resistance, and a method of manufacturing the same.

### TECHNICAL SOLUTION

In order to achieve the above object, a metal separator of the present application includes a first base material including a first manifold part, a second manifold part, and a reaction part provided between the first manifold part and the second manifold part, wherein the first manifold part and the second manifold part each have a plurality of openings and a surface layer part present between the plurality of openings, and a surface-modified layer is formed, respectively, on an upper surface of the surface layer parts and an inner surface of the openings.

The first base material may contain 28.000 wt% to 33.000 wt% of chromium, 0.010 wt% or less of carbon, 0.200 wt% or less of silicon, 0.300 wt% or less of manganese, 0.300 wt% or less of titanium, the balance iron, and other unavoidable impurities.

In addition, the surface-modified layer formed on the upper surface of the surface layer parts may contain chromium at 20 at% to 28 at% in a region from a surface exposed to the outside to a depth of 1.0 nm, and may contain iron at 15 at% to 25 at% in the region from the surface exposed to the outside to a depth of 1.0 nm.

Furthermore, the surface-modified layers formed, respectively, on the upper surface of the surface layer parts and the inner surface of the openings may have been heat-treated at 100 °C to 300 °C for 10 seconds to 300 seconds.

Moreover, the first base material may have a contact resistance of 14 mΩ·cm² or less under a contact pressure of 1.0 MPa, and a current density of 4 µA/cm² or less at a potential of 0.6 V_{vs SCE}.

In addition, the metal separator may further include a porous body stacked on an upper surface of the reaction part.

Furthermore, a fuel cell of the present application includes the metal separator.

Moreover, a method of manufacturing a metal separator of the present application includes a preparation step of preparing a first base material; a manifold part piercing step of forming a first manifold part and a second manifold part, respectively, each having a plurality of openings and a surface layer part present between the plurality of openings by punching both sides of one surface of the first base material, respectively, in the first base material; a surface-modified layer forming step of forming a surface-modified layer on a surface exposed to the outside of the first base material by modifying the exposed surface of the first base material on which the first manifold part and the second manifold part are formed; and a heat treatment step of heat-treating the first base material on which the surface-modified layer is formed, wherein a surface-modified layer is formed on an upper surface of the surface layer parts and an inner surface of the openings provided in each of the first manifold part and the second manifold part.

In addition, the first base material may contain 28.000 wt% to 33.000 wt% of chromium, 0.010 wt% or less of carbon, 0.200 wt% or less of silicon, 0.300 wt% or less of manganese, 0.300 wt% or less of titanium, the balance iron, and other unavoidable impurities.

Furthermore, the surface-modified layer forming step may include a first modification step of preparing a solution in which one or more selected from fluorine, hydrochloric acid, and phosphoric acid are added to a sulfuric acid solution, and immersing a surface of the first base material in the solution; and a second modification step of immersing the first base material that has undergone the first modification step in a solution containing hydrogen peroxide and fluorine.

Moreover, the heat treatment step may be performed at 100 °C to 300 °C for 10 seconds to 300 seconds.

In addition, a second base material may be prepared in the preparation step, and the method of manufacturing the metal separator may further include a porous body piercing step of punching and forming the prepared second base material into a porous body having a plurality of holes.

Furthermore, the method of manufacturing the metal separator may further include a laminate forming step of forming a laminate by stacking and bonding the porous body onto a central part of the first base material after performing the heat treatment step and the porous body piercing step.

Moreover, the surface-modified layer forming step may further include forming a surface-modified layer on a surface exposed to the outside of the second base material or porous body by modifying the exposed surface of the second base material or porous body, before or after the porous body piercing step, and the heat treatment step may further include heat-treating the second base material or porous body on which the surface-modified layer is formed.

In addition, the method of manufacturing the metal separator may further include a slitting step of slitting widths of the first base material and the second base material, respectively, before performing the manifold part piercing step and the porous body piercing step.

### EFFECTS OF THE DISCLOSURE

According to the metal separator and the method of manufacturing the same of the present application, not only can the electrical conductivity be excellent, but the corrosion resistance can also be excellent.

### BRIEF DESCRIPTION OF THE DRAWINGS

FIG. 1 is a top view showing, by way of example, a metal separator according to one embodiment of the present application;
FIG. 2 is a side view showing, by way of example, a manifold part formed in a first base material of the metal separator according to one embodiment of the present application by cutting it in the width direction; and
FIG. 3 is a top view showing, by way of example, a metal separator according to another embodiment of the present application.

### BEST MODE FOR CARRYING OUT THE INVENTION

Hereinafter, a metal separator of the present application will be described with reference to the accompanying drawings, the accompanying drawings are illustrative, and the metal separator of the present application is not limited to the accompanying drawings.

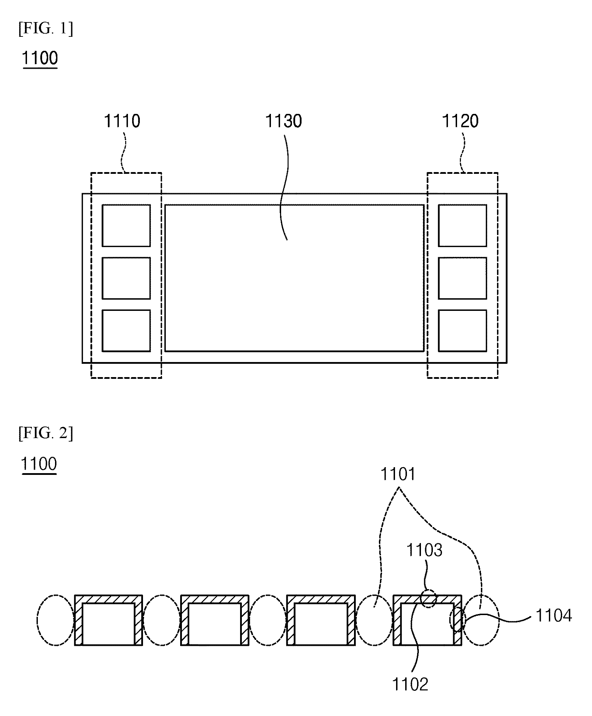

FIG. 1 is a top view showing by way of example a metal separator according to one embodiment of the present application. As shown in FIG. 1, the metal separator of the present application includes a first base material 1100. According to the metal separator of the present application, not only can the electrical conductivity be excellent, but the corrosion resistance can also be excellent.

The first base material 1100 is a material used in a metal separator for a fuel cell, and includes a first manifold part 1110, a second manifold part 1120, and a reaction part 1130 provided between the first manifold part 1110 and the second manifold part 1120.

FIG. 2 is a side view showing, by way of example, a manifold part formed in the first base material of the metal separator according to one embodiment of the present application by cutting it in the width direction. As shown in FIGS. 1 and 2, the first manifold part 1110 and the second manifold part 1120 are portions that supply hydrogen and air respectively to the first base material 1100 so that electrochemical reactions can occur in the separator, and have, respectively, a plurality of openings 1101 and a surface layer part 1102 present between the plurality of openings 1101, and surface-modified layers 1103 and 1104 are formed on the upper surface of the surface layer parts 1102 and the inner surface of the openings 1101 provided in each of the first manifold part 1110 and the second manifold part 1120. Specifically, in the first manifold part 1110 and the second manifold part 1120, hydrogen and air inlets and outlets for supplying and discharging hydrogen and air, respectively, may be formed, a cooling water inlet and outlet for adjusting the operating temperature may be formed, and each surface layer part 1102 present between each inlet and outlet may be provided. In one embodiment, the first manifold part 1110 may be formed at one end with respect to the longitudinal direction of the first base material 1100, the hydrogen inlet, cooling water outlet, and air outlet may be formed along a width direction perpendicular to the longitudinal direction of the first base material 1100, and each surface layer part 1102 may be present between the hydrogen inlet, cooling water outlet, and air outlet. Further, the second manifold part 1120 may be formed at the other end with respect to the longitudinal direction of the first base material 1100, the air inlet, cooling water inlet, and hydrogen outlet may be formed along the width direction perpendicular to the longitudinal direction of the first base material 1100, and each surface layer part 1102 may be present between the air inlet, cooling water inlet, and hydrogen outlet. In this case, as the number of the openings is not particularly limited as long as it is two or more, the upper limit is not particularly limited. In the present specification, the term "manifold parts" is used as the meaning to refer to both the first manifold part and the second manifold part. In addition, the longitudinal direction refers to the direction from one end toward the other end in the first base material 1100. Moreover, the width direction refers to the direction perpendicular to the longitudinal direction.

In one example, the first base material 1100 may contain 28.000 wt% to 33.000 wt% of chromium, 0.010 wt% or less of carbon, 0.200 wt% or less of silicon, 0.300 wt% or less of manganese, 0.300 wt% or less of titanium, the balance iron, and other unavoidable impurities. In one embodiment, the first base material 1100 may contain about 28.000 wt% to about 33.000 wt% of chromium, about 0.010 wt% or less of carbon, about 0.200 wt% or less of silicon, about 0.300 wt% or less of manganese, about 0.300 wt% or less of titanium, the balance iron, and other unavoidable impurities. Specifically, the first base material 1100 may have an upper limit of chromium content of about 32.000 wt% or less or about 31.000 wt% or less, and a lower limit of chromium content of about 29.000 wt% or more. Further, the first base material 1100 may have a lower limit of carbon content of about 0.001 wt% or more, a lower limit of silicon content of about 0.100 wt% or more, a lower limit of manganese content of about 0.100 wt% or more, and a lower limit of titanium content of about 0.100 wt% or more. By containing the components described above, the first base material 1100 can be excellent not only in electrical conductivity but also in corrosion resistance. In this case, since the physical properties of each component contained in the first base material 1100 have physical properties known in the art, they will be omitted.

In addition, the first base material 1100 may further contain one or more selected from 0.030 wt% or less of phosphorus, 0.002 wt% or less of sulfur, and 0.300 wt% or less of niobium. The first base material 1100 may further contain one or more selected from about 0.030 wt% or less of phosphorus, about 0.002 wt% or less of sulfur, and about 0.300 wt% or less of niobium. The phosphorus, sulfur, and niobium are not particularly limited in their lower limits and, for example, may each be about 0 wt% or more.

In one example, the surface-modified layer 1103 formed on the upper surface of the surface layer parts 1102 provided in each of the first manifold part 1110 and the second manifold part 1120 may contain chromium at 20 at% to 28 at% in a region from the surface exposed to the outside to a depth of 1.0 nm, and may contain about 20 at% to about 28 at% in one embodiment and specifically, about 22 at% to about 27 at% or about 24 at% to about 26 at%. As the surface-modified layer 1103 formed on the upper surface of the surface layer parts 1102 provided in each of the first manifold part 1110 and the second manifold part 1120 contains chromium in the content described above in the region from the surface exposed to the outside to a depth of 1.0 nm, the electrical conductivity as well as corrosion resistance can be excellent. In this case, the chromium content of the surface-modified layer 1103 can be measured using an EDAX instrument.

In another example, the surface-modified layer 1103 formed on the upper surface of the surface layer parts 1102 provided in each of the first manifold part 1110 and the second manifold part 1120 may contain iron at 15 at% to 25 at% in the region from the surface exposed to the outside to a depth of 1.0 nm, and may contain about 15 at% to about 25 at% in one embodiment and specifically, about 17 at% to about 23 at% or about 19 at% to about 21 at%. As the surface-modified layer 1103 formed on the upper surface of the surface layer parts 1102 provided in each of the first manifold part 1110 and the second manifold part 1120 contains iron in the content described above in the region from the surface exposed to the outside to a depth of 1.0 nm, the electrical conductivity as well as corrosion resistance can be excellent. In this case, the iron content of the surface-modified layer 1103 can be measured using an EDAX instrument.

The surface-modified layer 1103 formed, respectively, on the upper surface of the surface layer parts 1102 and the inner surface of the openings 1101 provided in each of the first manifold part 1110 and the second manifold part 1120 may have a thickness of 5 nm or less. Specifically, the thickness of the surface-modified layer 1103 formed, respectively, on the upper surface of the surface layer parts 1102 and the inner surface of the openings 1101 provided in each of the first manifold part 1110 and the second manifold part 1120 may be about 4 nm or less or about 3 nm or less. Further, the lower limit of the thickness of the surface-modified layer 1103 formed, respectively, on the upper surface of the surface layer parts 1102 and the inner surface of the openings 1101 provided in each of the first manifold part 1110 and the second manifold part 1120 may be about 1 nm or more. As the surface-modified layer 1103 formed, respectively, on the upper surface of the surface layer parts 1102 and the inner surface of the openings 1101 provided in each of the first manifold part 1110 and the second manifold part 1120 has the thickness described above, not only can the electrical conductivity be excellent, but also the corrosion resistance can be excellent.

In addition, the surface-modified layer 1103 formed, respectively, on the upper surface of the surface layer parts 1102 and the inner surface of the openings 1101 provided in each of the first manifold part 1110 and the second manifold part 1120 may have been heat-treated at 100 °C to 300 °C for 10 seconds to 300 seconds. In one embodiment, the surface-modified layer 1103 formed, respectively, on the upper surface of the surface layer parts 1102 and the inner surface of the openings 1101 provided in each of the first manifold part 1110 and the second manifold part 1120 may have been heat-treated at about 100 °C to about 300 °C for about 10 seconds to about 300 seconds. Specifically, the surface-modified layer 1103 formed, respectively, on the upper surface of the surface layer parts 1102 and the inner surface of the openings 1101 provided in each of the first manifold part 1110 and the second manifold part 1120 may have been heat-treated at about 120 °C to about 260 °C, about 140 °C to about 220 °C, or about 160 °C to about 180 °C for about 30 seconds to about 250 seconds, about 50 seconds to about 200 seconds, about 70 seconds to about 150 seconds, or about 90 seconds to about 100 seconds. As the surface-modified layer 1103 formed, respectively, on the upper surface of the surface layer parts 1102 and the inner surface of the openings 1101 provided in each of the first manifold part 1110 and the second manifold part 1120 is heat-treated under the conditions described above, the corrosion resistance can be improved.

The reaction part 1130 is a portion where electrochemical reactions occur by hydrogen and air supplied and discharged through the first manifold part 1110 and the second manifold part 1120, respectively.

For example, a flow path (not shown) may be formed on the upper surface of the reaction part 1130, and a porous body (not shown) described below may also be stacked. The method of forming a flow path on the upper surface of the reaction part 1130 may utilize any method known in the art and thus is not particularly limited. Further, the reaction part 1130 may have the form of a flat plate if the porous body is to be stacked thereon. By stacking the porous body 1200 on the reaction part 1130 in the form of a flat plate, separate flow path forming may not be necessary.

In one example, the thickness of the first base material 1100 may be 0.05 mm to 1 mm, and may be about 0.05 mm to about 1 mm in one embodiment. By having the thickness in the range described above, the first base material 110 can achieve excellent mechanical strength and gas permeability.

In another example, the first base material 1100 may have a contact resistance of 14 mΩ·cm² or less under a contact pressure of 1.0 MPa. In one embodiment, the first base material 1100 may have a contact resistance of about 14 mΩ·cm² or less under a contact pressure of 1.0 MPa. As the contact resistance measured under the contact pressure described above has the range described above, the first base material 1100 can be excellent in electrical conductivity. Further, in terms of the fact that the lower the contact resistance of the first base material 1100 measured under the contact pressure described above, the better the electrical conductivity, the lower limit is not particularly limited, but may be, for example, about 1 mΩ·cm² or more and specifically, about 3 mΩ·cm² or more, about 5 mΩ·cm² or more, about 10 mΩ·cm² or more, or about 12 mΩ·cm² or more.

Furthermore, in one example, the first base material 1100 may have a current density of 4 µA/cm² or less at a potential of 0.6 V_{vs SCE}. In one embodiment, the first base material 1100 may have a current density of about 4 µA/cm² or less at a potential of 0.6 V_{vs SCE}. As the current density measured at the potential described above has the range described above, the first base material 1100 can have excellent corrosion resistance. Further, in terms of the fact that the lower the current density of the first base material 1100 measured at the potential described above, the better the electrical conductivity, the lower limit is not particularly limited, but may be, for example, about 1 µA/cm² or more and specifically, about 3 µA/cm² or more.

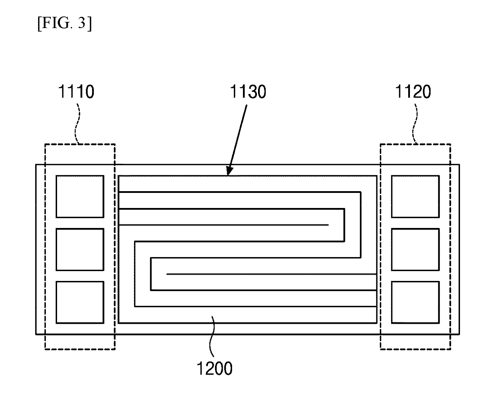

FIG. 3 is a top view showing, by way of example, a metal separator according to another embodiment of the present application. As shown in FIG. 3, the metal separator may further include a porous body 1200 stacked on the upper surface of the first base material 1100, specifically, on the upper surface of the reaction part 1130, and the porous body 1200 may include a plurality of holes (not shown) and a surface layer part (not shown) formed between the plurality of holes. In this case, as the number of the holes is not particularly limited as long as it is two or more, the upper limit is not particularly limited.

The porous body 1200 is a flow path in which the electrochemical reactions described above occur and which has a microporous structure in a porous shape. In this case, the porous body 1200 may have an area corresponding to the reaction part 1130 of the first base material 1100. In the present specification, the term "corresponding area" means the same area. By being stacked on the upper surface of the reaction part 1130 of the first base material 1100, the porous body 1200 can improve the role of the hydrogen or air flow path.

In one example, a surface-modified layer or a passivation film may be formed, respectively, on the upper surface of the surface layer parts and the inner surface of the holes provided in the porous body 1200. When a surface-modified layer is formed on the upper surface of the surface layer parts and/or the inner surface of the holes provided in the porous body 1200, it is possible to ensure excellent corrosion resistance and electrical conductivity of the porous body. Further, when a passivation film is formed on the upper surface of the surface layer parts and/or the inner surface of the holes provided in the porous body 1200, it is possible to prevent oxygen from infiltrating the inside of the porous body 1200, thereby preventing rust from occurring.

The porous body 1200 may contain 28.000 wt% to 33.000 wt% of chromium, 0.010 wt% or less of carbon, 0.200 wt% or less of silicon, 0.300 wt% or less of manganese, 0.300 wt% or less of titanium, the balance iron, and other unavoidable impurities. In one embodiment, the porous body 1200 may contain about 28.000 wt% to about 33.000 wt% of chromium, about 0.010 wt% or less of carbon, about 0.200 wt% or less of silicon, about 0.300 wt% or less of manganese, about 0.300 wt% or less of titanium, the balance iron, and other unavoidable impurities. Specifically, the porous body 1200 may have an upper limit of chromium content of about 32.000 wt% or less or about 31.000 wt% or less, and a lower limit of chromium content of about 29.000 wt% or more. Further, the porous body 1200 may have a lower limit of carbon content of about 0.001 wt% or more, a lower limit of silicon content of about 0.100 wt% or more, a lower limit of manganese content of about 0.100 wt% or more, and a lower limit of titanium content of about 0.100 wt% or more. Since the porous body 1200 is made of stainless steel containing chromium having the content described above, a very thin Cr₂O₃ passivation film with a thickness of 1 nm to 5 nm and about 1 nm to about 5 nm in one embodiment may be naturally formed on the surface when the surface is exposed to the outside, and modifying the passivation film may form a surface-modified layer. In this case, since the physical properties of each component contained in the porous body 1200 have physical properties known in the art, they will be omitted.

In one example, the porous body 1200 may further contain one or more selected from 0.030 wt% or less of phosphorus, 0.002 wt% or less of sulfur, and 0.300 wt% or less of niobium. The porous body 1200 may further contain one or more selected from about 0.030 wt% or less of phosphorus, about 0.002 wt% or less of sulfur, and about 0.300 wt% or less of niobium. The phosphorus, sulfur, and niobium are not particularly limited in their lower limits and, for example, may each be about 0 wt% or more.

The plurality of holes may have a minor axis length formed in a direction parallel to the air flow direction and a major axis length formed in a direction perpendicular to the air flow direction. For example, the minor axis length may have a length of 0.3 mm to 1.0 mm, and about 0.3 mm to 1.0 mm in one embodiment. The plurality of holes can improve the role of the hydrogen or air flow paths as their respective lengths have the lengths described above.

The present application also relates to a fuel cell. The fuel cell relates to a fuel cell including the metal separator described above, and specific details of a metal separator described below will be omitted as the content described in the metal separator above can be applied in the same manner.

The fuel cell includes the metal separator described above. By including the metal separator described above, the fuel cell can perform smooth electrochemical reactions in the membrane electrode assembly and seamlessly perform its function as an electrical path.

The fuel cell may include two of the metal separators described above, and a first gas diffusion layer, a membrane electrode assembly, and a second gas diffusion layer may be provided between the two metal separators. In this case, any type known in the art may be used without limitation as the first gas diffusion layer, the membrane electrode assembly, and the second gas diffusion layer, and there are no particular limitations.

The present application further relates to a method of manufacturing a metal separator. The method of manufacturing a metal separator relates to a method of manufacturing the metal separator described above, and specific details of a metal separator described below will be omitted as the content described in the metal separator above can be applied in the same manner.

The method of manufacturing the metal separator of the present application includes a preparation step, a manifold part piercing step, a surface-modified layer forming step, and a heat treatment step. According to the method of manufacturing the metal separator of the present application, a metal separator having excellent electrical conductivity as well as corrosion resistance can be manufactured.

The preparation step is a step of preparing a first base material.

For example, the first base material may contain 28.000 wt% to 33.000 wt% of chromium, 0.010 wt% or less of carbon, 0.200 wt% or less of silicon, 0.300 wt% or less of manganese, 0.300 wt% or less of titanium, the balance iron, and other unavoidable impurities. In one embodiment, the first base material may contain about 28.000 wt% to about 33.000 wt% of chromium, about 0.010 wt% or less of carbon, about 0.200 wt% or less of silicon, about 0.300 wt% or less of manganese, about 0.300 wt% or less of titanium, the balance iron, and other unavoidable impurities. Specifically, the first base material may have an upper limit of chromium content of about 32.000 wt% or less or about 31.000 wt% or less, and a lower limit of chromium content of about 29.000 wt% or more. Further, the first base material may have a lower limit of carbon content of about 0.001 wt% or more, a lower limit of silicon content of about 0.100 wt% or more, a lower limit of manganese content of about 0.100 wt% or more, and a lower limit of titanium content of about 0.100 wt% or more. As the first base material contains the components described above, a very thin Cr₂O₃ passivation film with a thickness of 1 nm to 5 nm and about 1 nm to about 5 nm in one embodiment can be naturally formed on the surface.

In addition, the first base material may further contain one or more selected from 0.030 wt% or less of phosphorus, 0.002 wt% or less of sulfur, and 0.300 wt% or less of niobium. In one embodiment, the first base material may further contain one or more selected from about 0.030 wt% or less of phosphorus, about 0.002 wt% or less of sulfur, and about 0.300 wt% or less of niobium. The phosphorus, sulfur, and niobium are not particularly limited in their lower limits and, for example, may each be about 0 wt% or more.

In one example, the method of manufacturing the metal separator may further include a cold rolling step. Specifically, the cold rolling step is a step of forming the first base material prepared in the preparation step and a second base material described later by passing them, respectively, between two rolls rotating at the recrystallization temperature or lower, and may be performed in the preparation step. By further including the cold rolling step, the method of manufacturing the metal separator can improve the dimensional accuracy and mechanical properties of the first base material and the second base material described later. In this case, when performing each step in the method of manufacturing the metal separator, a passivation film can be formed on the surface of each of the first base material and/or the second base material by natural oxidation if the first base material and/or the second base material are exposed to the outside. Specifically, since each of the first base material and the second base material is made of stainless steel containing chromium having the content described above, a very thin Cr₂O₃ passivation film with a thickness of 1 nm to 5 nm and about 1 nm to about 5 nm in one embodiment can be naturally formed.

The manifold part piercing step is a step of forming a first manifold part and a second manifold part, each having a plurality of openings and a surface layer part between the plurality of openings, respectively, in the first base material, and is performed by punching both sides of one surface of the first base material, respectively. In this case, when performing each step in the method of manufacturing the metal separator, a passivation film can be formed on the surface of each of the first base material and/or the second base material by natural oxidation if the first base material and/or the second base material are exposed to the outside.

The surface-modified layer forming step is a step of forming an exposed surface of the first base material that has undergone the manifold part piercing step into surface-modified layers, and is performed by modifying the surface exposed to the outside of the first base material on which the first manifold part and the second manifold part have been formed, specifically, the passivation film formed on the surface of the first base material, wherein the surface-modified layers are formed on each of the upper surface of the surface layer parts and the inner surface of the openings.

The method of manufacturing the metal separator can manufacture a metal separator that is excellent not only in electrical conductivity but also in corrosion resistance by having the surface-modified layer forming step performed after the manifold part piercing step even if the first base material contains the components described above.

In one example, the surface-modified layer forming step may include a first modification step and a second modification step.

The first modification step is a step in which the passivation film formed on the surface of the first base material is removed and the chemical components are reconstituted, and may be performed by preparing a solution in which one or more selected from fluorine, hydrochloric acid, and phosphoric acid are added to a sulfuric acid solution, and immersing the surface of the first base material in the solution. Specifically, the first modification step may be performed by preparing a solution in which one or more selected from 1.0 mol to 5.0 mol of fluorine, 0.3 mol to 1.0 mol of hydrochloric acid, and 0.3 mol to 1.0 mol of phosphoric acid are added to a sulfuric acid solution having a concentration of 350 g/L or more, and immersing the surface of the first base material, specifically, the passivation film formed on the surface of the first base material in the solution at 40 °C to 80 °C for 10 seconds to 180 seconds. In one embodiment, the first modification step may be performed by preparing a solution in which one or more selected from about 1.0 mol to about 5.0 mol of fluorine, about 0.3 mol to about 1.0 mol of hydrochloric acid, and about 0.3 mol to about 1.0 mol of phosphoric acid are added to a sulfuric acid solution having a concentration of about 350 g/L or more, and immersing the surface of the first base material, specifically, the passivation film formed on the surface of the first base material in the solution at about 40 °C to about 80 °C for about 10 seconds to about 180 seconds. As the method of manufacturing the metal separator includes the first modification step, the amount of chromium hydroxide produced in the surface-modified layers can be improved, and as a result, a metal separator with improved corrosion resistance and electrical conductivity can be manufactured. In this case, the ratio of the components contained in the surface-modified layers can be adjusted according to the component ratio of the solution used in the first modification step and the immersion conditions.

The second modification step is a step of removing smut, a by-product that may be produced through the first modification step, may be performed continuously after the first modification step, and may be performed by immersing the first base material that has undergone the first modification step in a solution containing hydrogen peroxide and fluorine. Specifically, the second modification step may be performed by immersing the first base material that has undergone the first modification step in a solution containing 1.0 mol to 5.0 mol of hydrogen peroxide and 1.0 mol to 5.0 mol of fluorine at 40 °C to 80 °C for 10 seconds to 180 seconds. In one embodiment, the second modification step may be performed by immersing the first base material that has undergone the first modification step in a solution containing about 1.0 mol to about 5.0 mol of hydrogen peroxide and about 1.0 mol to about 5.0 mol of fluorine at about 40 °C to about 80 °C for about 10 seconds to about 180 seconds. By including the second modification step, the surface-modified layer forming step can secure the cleanliness of the surface of the surface-modified layers.

The heat treatment step is a step of strengthening the surface-modified layers formed on the first base material, and is performed by heat-treating the first base material on which the surface-modified layers have been formed through the surface-modified layer forming step. For example, the heat treatment step may be performed at 100 °C to 300 °C for 10 seconds to 300 seconds. In one embodiment, the heat treatment step may be performed at about 100 °C to about 300 °C for about 10 seconds to about 300 seconds. By including the heat treatment step, the method of manufacturing the metal separator can induce a dehydration phenomenon and convert iron hydroxide contained in the surface-modified layers into iron oxide, and can thus manufacture a metal separator with improved corrosion resistance.

In one example, the method of manufacturing the metal separator may further include preparing a second base material in the preparation step, and may further include a porous body piercing step for the prepared second base material.

The second base material prepared in the preparation step may contain 28.000 wt% to 33.000 wt% of chromium, 0.010 wt% or less of carbon, 0.200 wt% or less of silicon, 0.300 wt% or less of manganese, 0.300 wt% or less of titanium, the balance iron, and other unavoidable impurities. In one embodiment, the second base material may contain about 28.000 wt% to about 33.000 wt% of chromium, about 0.010 wt% or less of carbon, about 0.200 wt% or less of silicon, about 0.300 wt% or less of manganese, about 0.300 wt% or less of titanium, the balance iron, and other unavoidable impurities. Specifically, the second base material may have an upper limit of chromium content of about 32.000 wt% or less or about 31.000 wt% or less, and a lower limit of chromium content of about 29.000 wt% or more. Further, the second base material may have a lower limit of carbon content of about 0.001 wt% or more, a lower limit of silicon content of about 0.100 wt% or more, a lower limit of manganese content of about 0.100 wt% or more, and a lower limit of titanium content of about 0.100 wt% or more. As the second base material contains the components described above, a very thin Cr₂O₃ passivation film with a thickness of 1 nm to 5 nm and about 1 nm to about 5 nm in one embodiment can be naturally formed on the surface. In addition, the second base material may further contain one or more selected from 0.030 wt% or less of phosphorus, 0.002 wt% or less of sulfur, and 0.300 wt% or less of niobium. In one embodiment, the second base material may further contain one or more selected from about 0.030 wt% or less of phosphorus, about 0.002 wt% or less of sulfur, and about 0.300 wt% or less of niobium. The phosphorus, sulfur, and niobium are not particularly limited in their lower limits and, for example, may each be about 0 wt% or more.

The porous body piercing step is a step of forming the second base material, on which the surface-modified layer has not been formed, into a porous body having a plurality of holes before performing the surface-modified layer forming step, and may be performed by punching the second base material on which the surface-modified layer has not been formed. By including the porous body piercing step, the method of manufacturing the metal separator can improve the role of the hydrogen or air flow path.

In one example, the method of manufacturing the metal separator may further include a three-dimensional forming step. The three-dimensional forming step is a step for forming an air flow path in the porous body, and may be performed by forming the porous body, which has undergone the porous body piercing step, with a press. By further including the three-dimensional forming step, the method of manufacturing the metal separator can secure an air flow path in a three-dimensional structure in the porous body that has undergone the three-dimensional forming step.

In another example, the method of manufacturing the metal separator may further include a laminate forming step. The laminate forming step is a step of forming a laminate by stacking the porous body on the first base material, and may be performed by stacking and bonding the porous body onto the central part of the first base material including the first and second manifold parts having the surface layer parts and the openings described above, after performing the heat treatment step and the porous body piercing step. For example, the bonding method may use a bonding method using laser welding or micro-spot welding. By including the laminate forming step, the method of manufacturing the metal separator can manufacture a metal separator of a two-layer structure in which the porous body is stacked on the first base material including the first and second manifold parts having the surface layer parts and the openings described above.

In one example, the surface-modified layer forming step may further include forming a surface-modified layer on the exposed surface of the second base material or porous body by modifying the surface exposed to the outside of the second base material or porous body before or after the porous body piercing step, and the heat treatment step may further include heat-treating the second base material or porous body on which the surface-modified layer has been formed. Specifically, the surface-modified layer forming step for the second base material may be performed before the porous body piercing step, and after the surface-modified second base material has undergone the porous body piercing step, a surface-modified layer may be formed on the upper surface of the surface layer parts provided in each of them, and a passivation film may be formed on the inner surface of the holes. Further, the surface-modified layer forming step for the porous body may be performed after the porous body piercing step, and after the porous body has undergone the surface-modified layer forming step, a surface-modified layer may be formed on the upper surface of the surface layer parts and the inner surface of the holes provided in each of them.

Furthermore, in one example, the method of manufacturing the metal separator may further include a slitting step. Specifically, the slitting step is a step of slitting each of the first base material and the second base material on which the surface-modified layer has not been formed to a width for application to the metal separator before performing the manifold part piercing step and the porous body piercing step. For example, each of the first base material and the second base material on which the surface-modified layer has not been formed may be divided into 1/4 in width through the slitting step.

In the following, the present application will be described in greater detail through embodiments according to the present application and comparative examples not according to the present application, but the scope of the present application is not limited by the embodiments presented below.

### Embodiment 1

### Manufacture of Metal Separator

A first base material having a thickness of 0.1 mm and a second base material having a thickness of 0.08 mm were prepared, each consisting of 30.000 wt% of chromium, 0.006 wt% of carbon, 0.144 wt% of silicon, 0.200 wt% of manganese, 0.016 wt% of phosphorus, 0.001 wt% of sulfur, 0.200 wt% of titanium, 0.200 wt% of niobium, the balance iron, and other unavoidable impurities, and cold rolling was performed by passing each of the first base material and the second base material between two rotating rolls. At this time, the surface of each of the first base material and the second base material was naturally formed into a very thin Cr₂O₃ passivation film with a thickness of 1 nm to 5 nm by natural oxidation.

Then, the width of each of the first base material and the second base material was divided to have a width of 120 mm by slitting it from 500 nm to 1/4.

Then, the second base material was pierced by punching, and then three-dimensionally formed with a press, thereby forming a porous body having a plurality of holes and a surface layer part present between the plurality of holes. At this time, the unnecessary outer edge parts of the porous body were removed during the three-dimensional forming.

Then, a first manifold part and a second manifold part, which include a plurality of openings and a surface layer part present between the plurality of openings, were respectively formed by punching both sides of one surface of the first base material, respectively, in the first base material.

Then, a solution in which 3.0 mol of fluorine was added to a sulfuric acid solution having a concentration of 400 g/L was prepared, surface modification of performing a first modification treatment in which the surface of each of the first base material and the porous body was immersed in the solution at a temperature of 60 °C for 30 seconds and then successively performing a second modification treatment of immersing it in a solution containing 3.5 mol of hydrogen peroxide and 2.5 mol of fluorine at a temperature of 60 °C for 60 seconds was performed, a surface-modified layer was formed on the surface of each of the first base material and the porous body, and accordingly, a surface-modified layer having a thickness of 2 nm was formed on the upper surface of the surface layer parts and the inner surface of the openings or holes, respectively.

Then, each of the first base material and the porous body on which the surface-modified layer was formed was heat-treated at 160 °C for 90 seconds.

Then, the porous body was stacked on the central part of the heat-treated first base material, and laser bonding was performed, thereby manufacturing a metal separator having the porous body stacked on the first base material.

### Comparative Example 1

### Manufacture of Metal Separator

A first base material having a thickness of 0.1 mm and a second base material having a thickness of 0.08 mm were prepared, each consisting of 30.000 wt% of chromium, 0.006 wt% of carbon, 0.144 wt% of silicon, 0.200 wt% of manganese, 0.016 wt% of phosphorus, 0.001 wt% of sulfur, 0.200 wt% of titanium, 0.200 wt% of niobium, the balance iron, and other unavoidable impurities, and cold rolling was performed by passing each of the first base material and the second base material between two rotating rolls. At this time, the surface of each of the first base material and the second base material was naturally formed into a very thin Cr₂O₃ passivation film with a thickness of 1 nm to 5 nm by natural oxidation.

Then, a solution in which 3.0 mol of fluorine was added to a sulfuric acid solution having a concentration of 400 g/L was prepared, surface modification of performing a first modification treatment in which the surface of each of the first base material and the second base material was immersed in the solution at a temperature of 60 °C for 30 seconds and then successively performing a second modification treatment of immersing it in a solution containing 3.5 mol of hydrogen peroxide and 2.5 mol of fluorine at a temperature of 60 °C for 60 seconds was performed, and thus, a surface-modified layer with a thickness of 2 nm was formed on the surface of each of the first base material and the second base material.

Then, each of the first base material and the second base material on which the surface-modified layer was formed was heat-treated at 160 °C for 90 seconds.

Then, the width of each of the first base material and the second base material that were heat-treated was divided to have a width of 120 mm by slitting it from 500 mm to 1/4.

Then, the heat-treated second base material was pierced by punching, and then three-dimensionally formed with a press and formed into a porous body having a plurality of holes. At this time, the unnecessary outer edge parts of the porous body were removed during the three-dimensional forming.

Then, a first manifold part and a second manifold part, which include a plurality of openings and a surface layer part formed between the plurality of openings, were respectively formed by punching both sides of one surface of the first base material, respectively, in the heat-treated first base material. At this time, a surface-modified layer was formed on the upper surface of the surface layer parts formed in each of the first manifold part and the second manifold part, no surface-modified layer was formed on the inner surface of the openings, which was naturally formed with a very thin Cr₂O₃ passivation film having a thickness of 1 nm to 5 nm.

Then, the porous body was stacked on the central part of the first base material, and laser bonding was performed, thereby manufacturing a metal separator having the porous body stacked on the first base material.

### Comparative Example 2

### Manufacture of Metal Separator

A metal separator was manufactured in the same manner as in Embodiment 1 above, except that the first modification treatment, the second modification treatment, and the heat treatment were not performed. In this case, in the manufactured metal separator, a very thin Cr₂O₃ passivation film with a thickness of 1 nm to 5 nm was naturally formed, respectively, on the upper surface of the surface layer parts and the inner surface of the openings of the first and second manifold parts.

### Comparative Example 3

### Manufacture of Metal Separator

A metal separator was manufactured in the same manner as in Embodiment 1 above, except that no heat treatment was performed.

### Experimental Example 1. Analysis and Evaluation of Components of Surface Modification Layer and Passivation Film

The components of the region up to a depth of 1.0 nm from the surface exposed to the outside of the surface-modified layer or passivation film formed on the upper surface of the surface layer parts in the first base material of the metal separator manufactured in the embodiment and comparative examples were analyzed with an EDAX instrument by using energy dispersive spectroscopy (EDS), and the results are shown in Table 1 below.

### Experimental Example 2. Evaluation of Contact Resistance

The metal separators manufactured in the embodiment and comparative examples were inserted between gas diffusion layers (a carbon paper type, by SGL Co.), the contact resistance of the first manifold part of the metal separators manufactured in the embodiment and comparative examples was then measured using a method of measuring current under a contact pressure of 1.0 MPa, and the results are shown in Table 1 below.

### Experimental Example 3. Evaluation of Current Density

The current density for the first manifold part and second manifold part of the metal separators manufactured in the embodiment and comparative examples utilized the Tafel slope evaluation of a potentiostat, the electrokinetic potential evaluation was performed in a mixture of 0.1 N sulfuric acid and 2 ppm hydrofluoric acid heated to 80 °C and was measured when a voltage of 0.6 V_{SCE} was applied, and the results are shown in Table 1 below.

**[Table 1]**

| | Analysis of components of the surface-modified layer or passivation film formed on the upper surface of the surface layer parts provided in the manifold parts | | Presence or absence of surface-modified layer | | Contact resistance (mΩ·cm²) | Current density (µA/cm²) |
|---|---|---|---|---|---|---|
| | Chromium (at%) | Iron (at%) | Upper surface of the surface layer parts provided in the manifold parts | Inner surface of the openings provided in the manifold parts | | |
| Embodiment 1 | 25 | 20 | O | O | 13 | 3 |
| Comparative Example 1 | 15 | 20 | O | X | 20 | 5 |
| Comparative Example 2 | 30 | 5 | X | X | 480 | 6 |
| Comparative Example 3 | 25 | 20 | O | O | 13 | 12 |

As shown in Table 1 above, it has been confirmed that the metal separator manufactured in Embodiment 1 above has a lower contact resistance and current density compared to the metal separators manufactured in Comparative Examples 1 and 2, and thus, is excellent in electrical conductivity and corrosion resistance.

In addition, it has been confirmed that the metal separator manufactured in Embodiment 1 above has a similar contact resistance and thus a similar electrical conductivity to the metal separator manufactured in Comparative Example 3, but has a relatively lower current density and thus, is excellent in the corrosion resistance of the manifold parts.

### <Description of Reference Numerals>

- 1100:: First base material
- 1110:: First manifold part
- 1120:: Second manifold part
- 1130:: Reaction part
- 1101:: Opening
- 1102:: Surface layer part
- 1103:: Surface-modified layer formed on the upper surface of the surface layer part
- 1104:: Surface-modified layer formed on the inner surface of the opening
- 1200:: Porous body

## Claims

1. A metal separator comprising:
a first base material including a first manifold part, a second manifold part, and a reaction part provided between the first manifold part and the second manifold part,
wherein the first manifold part and the second manifold part each have a plurality of openings and a surface layer part present between the plurality of openings, and
a surface-modified layer is formed, respectively, on an upper surface of the surface layer parts and an inner surface of the openings.

2. The metal separator of claim 1, wherein the first base material contains 28.000 wt% to 33.000 wt% of chromium, 0.010 wt% or less of carbon, 0.200 wt% or less of silicon, 0.300 wt% or less of manganese, 0.300 wt% or less of titanium, the balance iron, and other unavoidable impurities.

3. The metal separator of claim 1, wherein the surface-modified layer formed on the upper surface of the surface layer parts contains chromium at 20 at% to 28 at% in a region from a surface exposed to the outside to a depth of 1.0 nm, and contains iron at 15 at% to 25 at% in the region from the surface exposed to the outside to a depth of 1.0 nm.

4. The metal separator of claim 1, wherein the surface-modified layers formed, respectively, on the upper surface of the surface layer parts and the inner surface of the openings have been heat-treated at 100 °C to 300 °C for 10 seconds to 300 seconds.

5. The metal separator of claim 1, wherein the first base material has a contact resistance of 14 mΩ·cm² or less under a contact pressure of 1.0 MPa, and a current density of 4 µA/cm² or less at a potential of 0.6 V_{vs SCE}.

6. The metal separator of claim 1, further comprising:
a porous body stacked on an upper surface of the reaction part.

7. A fuel cell comprising a metal separator according to any one of claims 1 to 6.

8. A method of manufacturing a metal separator, comprising:
a preparation step of preparing a first base material;
a manifold part piercing step of forming a first manifold part and a second manifold part, respectively, each having a plurality of openings and a surface layer part present between the plurality of openings by punching both sides of one surface of the first base material, respectively, in the first base material;
a surface-modified layer forming step of forming a surface-modified layer on a surface exposed to the outside of the first base material by modifying the exposed surface of the first base material on which the first manifold part and the second manifold part are formed; and
a heat treatment step of heat-treating the first base material on which the surface-modified layer is formed,
wherein a surface-modified layer is formed on an upper surface of the surface layer parts and an inner surface of the openings provided in each of the first manifold part and the second manifold part.

9. The method of claim 8, wherein the first base material contains 28.000 wt% to 33.000 wt% of chromium, 0.010 wt% or less of carbon, 0.200 wt% or less of silicon, 0.300 wt% or less of manganese, 0.300 wt% or less of titanium, the balance iron, and other unavoidable impurities.

10. The method of claim 8, wherein the surface-modified layer forming step comprises:
a first modification step of preparing a solution in which one or more selected from fluorine, hydrochloric acid, and phosphoric acid are added to a sulfuric acid solution, and immersing a surface of the first base material in the solution; and
a second modification step of immersing the first base material that has undergone the first modification step in a solution containing hydrogen peroxide and fluorine.

11. The method of claim 8, wherein the heat treatment step is performed at 100 °C to 300 °C for 10 seconds to 300 seconds.

12. The method of claim 8, wherein a second base material is prepared in the preparation step,
the method further comprising:
a porous body piercing step of punching and forming the prepared second base material into a porous body having a plurality of holes.

13. The method of claim 12, further comprising:
a laminate forming step of forming a laminate by stacking and bonding the porous body onto a central part of the first base material after performing the heat treatment step and the porous body piercing step.

14. The method of claim 12, wherein the surface-modified layer forming step further comprises forming a surface-modified layer on a surface exposed to the outside of the second base material or porous body by modifying the exposed surface of the second base material or porous body, before or after the porous body piercing step, and
the heat treatment step further comprises heat-treating the second base material or porous body on which the surface-modified layer is formed.

15. The method of claim 12, further comprising:
a slitting step of slitting widths of the first base material and the second base material, respectively, before performing the manifold part piercing step and the porous body piercing step.
